(19) Europäisches Patentamt
European Patent Office
Office européen des brevets

(11) **EP 1 687 656 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(21) Anmeldenummer: **04765082.5**

(22) Anmeldetag: **10.09.2004**

(51) Int Cl.:
*G01S 3/784* (2006.01)   *G01C 15/00* (2006.01)

(86) Internationale Anmeldenummer:
**PCT/EP2004/010157**

(87) Internationale Veröffentlichungsnummer:
**WO 2005/026767 (24.03.2005 Gazette 2005/12)**

(54) **VERFAHREN ZUR RICHTUNGSBESTIMMUNG ZU EINEM ZU VERMESSENDEN OBJEKT**

METHOD FOR DETERMINATION OF THE DIRECTION TO AN OBJECT FOR SURVEYING

PROCEDE DE MESURE DIRECTIONNELLE PAR RAPPORT A UN OBJET A MESURER

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.09.2003 EP 03020734**

(43) Veröffentlichungstag der Anmeldung:
**09.08.2006 Patentblatt 2006/32**

(73) Patentinhaber: **Leica Geosystems AG**
**9435 Heerbrugg (CH)**

(72) Erfinder:
• **KIRSCHNER, Holger**
**CH-9435 Heerbrugg (CH)**

• **GRAF, Roland**
**CH-9033 Untereggen (CH)**

(74) Vertreter: **Büchel, Kaminski & Partner**
**Patentanwälte Est.**
**Austrasse 79**
**9490 Vaduz (LI)**

(56) Entgegenhaltungen:
**EP-A- 0 474 307       EP-A- 0 661 519**
**WO-A-02/069268**

**Beschreibung**

Die Erfindung betrifft ein Verfahren zur Richtungsbestimmung zu einem zu vermessenden Objekt nach dem Anspruch 1 sowie ein Computerprogrammprodukt und ein Computer-Daten-Signal.

In vielen geodätischen Aufgabenstellungen bzw. Anwendungen soll von einem Detektionspunkt aus die Richtung zu einem Objektpunkt bestimmt werden, wie z.B. der Azimut- und Elevationswinkel zu einem weiteren Referenzpunkt oder der Kompassrichtung. Solche Problemstellungen sind klassische Aufgaben der Geodäsie.

Um einen Objektpunkt bzw. ein zu vermessendes Objekt erfassbar und vermessbar zu gestalten, wird dieser Objektpunkt gegenüber anderen Punkten des Raumes ausgezeichnet, z.B. indem von diesem aktiv Strahlung ausgesendet wird.

Eine andere Möglichkeit der Objektpunktauszeichnung ist die Erhöhung der gerichteten Reflektivität im Objektpunkt beispielsweise durch Anbringen eines oder mehrerer Reflektoren, z.B. einem Cornercube mit dessen Inversionszentrum auf dem Punkt oder in definierter Umgebung des Punktes.

Ein weiteres Beispiel für die Auszeichnung eines Objektpunktes ist seine Definition als Position relativ zu einer bekannten Objektform, wie z.B. einer Zieltafel oder bzgl. von Kante/Ecke/Mitte/Schwerpunkt eines Objekts.

Vom Detektionspunkt aus wird ein definiertes Raumwinkelelement bzw. Detektorgesichtsfeld, welches den Objektpunkt enthält oder enthalten soll, von einem Sensor erfasst und aufgenommen, so dass eine Überwachung möglich ist. Befindet sich der Objektpunkt innerhalb des überwachten Raumwinkelelements, so führt die Objektpunktauszeichnung vermöge einer Abbildung zu einem Muster auf dem Sensor. Dieses für das Objekt spezifische Muster wird auf dem Detektor in richtungsabhängiger Weise mit einer bestimmten Lage oder Position abgebildet. Diese Position des Musters auf dem Sensor ermöglicht eine Berechnung der Richtung des Objektpunktes relativ zum Detektionspunkt, wobei ggf. noch Zusatzinformationen einbezogen werden können.

Ein Beispiel für eine solche, zur Richtungsbestimmung verwendbare Abbildung ist die fokussierte Abbildung des Objektpunktes und seiner definierten Umgebung auf einen Position-Sensitive-Device (PSD) oder Bildsensor unter Verwendung eines Objektivs oder einer diffraktiven Optik. Ein anderes Beispiel ist die Abbildung mit Fokus unendlich, welche empfangenen Objektstrahlen direkt eine richtungsabhängige Position auf dem Sensor zuordnet. In diesem Beispiel wird die von einem Objektpunkt ausgehende divergente Strahlung zu einem näherungsweise zirkularsymmetrischen Muster auf dem Sensor abgebildet.

Die Position des Musters wird vom Sensor bzw. einer Auswerteelektronik bestimmt und in die gesuchte Richtung des Objektpunktes relativ zum Detektionspunkt umgerechnet, wobei ggf. Zusatzinformationen über Objekteigenschaften, Objektabstand und Detektoreigenschaften verwendet werden können.

Als ein geeigneter Sensor, welcher die Positionsbestimmung ermöglicht, kann zum Beispiel ein PSD als Einzelsensor oder ein Bildsensor als Matrix von Einzelsensoren, sog. Pixel oder Bildpunkten, verwendet werden. Letzterer hat den Vorteil, dass sich eventuell störendes Fremdlicht auf die Einzelsensoren bzw. Bildpunkte des Bildsensors verteilt und damit die Auslastung der Dynamik des Sensors sowie das Signal/Hintergrund Verhältnis günstiger ist als bei der Verwendung nur eines Einzelsensors.

Ein Nachteil bei der Verwendung von Bildsensoren ist jedoch der erheblich erhöhte Zeitbedarf zum Auslesen und Auswerten der Bildpunkte im Vergleich zur Verwendung nur eines Einzelsensors. Zum Beispiel benötigt ein VGA Bildsensor mit 640x480 Bildpunkten einen 307200-mal höheren Zeitbedarf im Vergleich zur Verwendung eines Einzelsensors.

Bei der Richtungsbestimmung zu einem Objekt oder einem Objektpunkt ergeben sich bei der - aus Gründen der Stabilität gegenüber Störstrahlung vorteilhaften - Verwendung von Flächensensoren Probleme aufgrund des erhöhten Zeitbedarfs zum Auslesen und Verarbeiten des Sensorsignals, so dass eine vergleichsweise geringe Messfrequenz der Richtungsbestimmung resultiert.

Dabei kann die Richtungsbestimmung je nach Anwendung in zwei Aufgabenstellungen unterteilt werden:

Statische Messaufgabe - Hierbei ist der Objektpunkt unbeweglich oder hat eine bezüglich Sollgenauigkeit und Messfrequenz der Richtungsbestimmung vernachlässigbare Veränderung der Richtung zum Detektor.

Dynamische Messaufgabe - Hierbei ist die Veränderung der Richtung vom Objektpunkt zum Detektor nicht vernachlässigbar. Bei der dynamischen Messaufgabe kommt es zu Problemen wenn die Veränderung der Richtung zum Objektpunkt während der Messauswertung so groß ist, dass der Objektpunkt bei der darauffolgenden Messung ausserhalb des Detektorgesichtsfeldes gerät. Folgen mehrere Messungen aufeinander so kann sich die Richtung vom Objektpunkt zum Detektor im Verlauf der Messungen ändern, z.B. durch eine willkürliche oder unwillkürliche Bewegung des Objektpunktes. Durch solche, ggf. wiederholte Veränderungen kommt es bei der Richtungsbestimmung zu Problemen, wenn der Objektpunkt das Gesichtsfeld des Detektors verlässt.

In diesem Fall wird eine, evtl. auch automatisch durchgeführte Nachführung des Gesichtsfeldes, z.B. zur Zielverfolgung, erschwert. Unter ungünstigen Umständen kann eine auf der Richtungsmessung basierende Nachführung mit dem Ziel einer erneuten Erfassung des Objektpunktes nicht mehr durchgeführt werden, so dass die Messung unter Umständen abgebrochen werden muss.

Eine Optimierung der Stabilität der Richtungsmessung gegenüber schnellen Veränderungen der Richtung ist daher von Vorteil. Dabei darf allerdings eine vorgegebene Messgenauigkeit der Richtungsmessung nicht unterschritten werden.

Ein Spezialfall der Richtungsmessung betrachtet Messgenauigkeiten, welche größer oder gleich dem Detektorgesichtsfeldwinkel sind. Damit besteht die Messaufgabe nur mehr in der Entscheidung bzw. Verifikation, dass der Objektpunkt innerhalb des Sensorgesichtfeldes ist. Dies ist beispielsweise für die Verfolgung des Objektpunktes ausreichend.

Eine - ggf. angepasst - hohe Messfrequenz führt zu einer höheren Toleranz der Regelung gegenüber schnellen Richtungsänderungen und ist damit auch in diesem Spezialfall von Vorteil.

Hohe Messfrequenzen sind auch bei der statischen Messaufgabe günstig, da bei der schnellen Messung innerhalb der von der Anwendung bestimmten Zeit mehrere Einzelmessungen gemittelt werden können und damit eine Erhöhung der Messgenauigkeit möglich wird. Ausserdem kommt es bei einer Störung der Messung durch turbulente Luftströmungen (Wärmeschlieren) zu kurzzeitigen starken Störungen, welche bei schneller Messung eliminiert werden können.

Ein Verfahren gemäss dem Oberbegriff des Anspruchs 1 ist aus der EP0661519A bekannt. Eine Aufgabe der vorliegenden Erfindung besteht darin, ein Verfahren bereitzustellen, das Richtungsmessungen unter Einhaltung der erforderlichen Messgenauigkeit gegenüber Änderungen der Richtung stabilisiert.

Eine weitere Aufgabe der vorliegenden Erfindung liegt in der Ermöglichung einer auf einer Richtungsmessung basierenden Nachführung auch bei grösseren Winkelgeschwindigkeiten bzw. Winkelbeschleunigungen von zu erfassenden Objekten.

Diese Aufgaben werden erfindungsgemäss durch Merkmale des Anspruchs 1 oder durch Merkmale der Unteransprüche gelöst bzw. weitergebildet.

Die Erfindung betrifft ein Verfahren zur Richtungsbestimmung zu einem Objektpunkt, wobei aus Gründen der Fremdlichtstabilität ein Bildsensor bzw. ein Array von Einzelsensoren verwendet wird.

Bei speziellen Typen von Bildsensoren, wie z.B. CMOS-Bildsensoren, ist es möglich, auf einzelne Bildpunkte oder Pixel direkt zuzugreifen. Solche Bildsensoren erlauben einerseits die Einschränkung des - z.B. quadratischen - ausgewerteten Bildfeldes des Sensors in Form eines sog. "Subwindowings". Verbunden mit der Verringerung der Zahl von ausgelesenen Pixeln ist eine kürzere Zeit beim Auslesen und Nachverarbeiten der Pixeldaten.

Zum anderen kann ein Zeitgewinn bei solchen Sensoren auch durch ein sogenanntes "Subsampling" erreicht werden. Es handelt sich dabei um das Auslesen von beispielsweise nur jeder 2. (3.,4., ...) Spalte und/oder nur jeder 2. (3.,4., ...) Zeile des Bild-Sensorarrays.

Erfindungsgemäss erfolgt eine Optimierung der Stabilität der Richtungsbestimmung gegenüber Änderungen in der Richtung durch Wahl der in diesem Sinne optimalen Kombination von Subsampling und Subwindowing anhand der geforderten Messgenauigkeit und anhand des Sensortimings. Dazu wird sowohl Information über die erforderliche Messgenauigkeit als auch über das Zeitverhalten des Bildsensors verwendet. Die Optimierung kann natürlich auch unter Vorgabe einer oder mehrerer Nebenbedingungen erfolgen, z.B. Limits für die Messfrequenz.

Dabei werden Subsampling und Subwindowing zusammengefasst, so dass innerhalb eines Teilbereichs des vom Detektor erfassten Bildes eine Menge von Bildpunkten ausgewählt wird, so dass ausserhalb des Teilbereichs keine Bildpunkte berücksichtigt werden. Dabei werden die Parameter zur Auswahl des Teilbereichs und die Parameter zur Auswahl der Bildpunkte innerhalb des Teilbereichs unter Einhaltung der notwendigen Messgenauigkeit optimiert.

Gegenüber einem reinen Subwindowing oder einem reinen Subsampling besitzt das erfindungsgemässe Verfahren Vorteile, da die Optimierung des Subwindowing in zeitlicher Hinsicht, d.h. zur Erzielung einer hohen Messfrequenz, eine maximale Verkleinerung des Erfassungsbereichs bedeuten würde. Auf der anderen Seite ist ein reines Subsampling aufgrund der Auswertung des gesamten Erfassungsbereichs hinsichtlich der minimalen Zahl von auszuwertenden Bildpunkten deutlich grösser als ein erfindungsgemässes Verfahren, so dass entweder bei gleicher Messgenauigkeit geringere Messfrequenzen oder aber bei gleicher Messfrequenz geringere Messgenauigkeiten folgen.

Im Folgenden wird das Auslesen von nur jeder N-ten Spalte (bzw. N-ten Zeile) als N-fach Spaltensubsampling (N-fach Zeilensubsampling) bezeichnet.

In beiden Fällen wird von der über den Bildsensor aufgenommenen Bildinformation nur eine Teilmenge verwendet. Diese besteht im einfachsten Fall aus der Auswahl einer Teilmenge der Bildpunkte, deren Inhalt ausgelesen wird. Es können jedoch auch Aggregate mehrerer Bildpunkte, z.B. in Form der Zusammenfassung zu Überstrukturen von Pixeln gebildet werden.

In einem der eigentlichen Richtungsmessung vorgeschalteten Schritt können die Bedingungen bzw. Parameter der Bildaufnahme und Bildauswertung festgelegt werden. Dabei wird anhand von Objektgröße, Objektabstand und/oder gewünschter Messgenauigkeit entschieden ob/und welches Spaltensubsampling und ob/und welches Zeilensubsampling durchgeführt werden kann. Hierbei soll die Position des Musters, welche die Berechnung der Richtung zum Objektpunkt erlaubt, auch mit Subsampling hinreichend genau bestimmbar sein. Dies gilt insbesondere, wenn das Muster durch eine fokussierte Abbildung einer komplexen Objektpunktumgebung generiert wird. Die Position des Bildes einer Messmarke auf dem Sensor ist nur hinreichend genau zu extrahieren, wenn dieses Bild eine - abhängig von der Komplexität der Markierung - größere Anzahl von Pixel beinhaltet. Ein Beispiel für eine Abschätzung der Messgenauigkeit für einfache Muster ist im Folgenden skizziert, wobei die Darstellung nur für die Zeilenrichtung des Sensors erfolgt. Die Vorgehensweise bei Spaltenrichtung erfolgt analog.

Das Muster enthält in horizontaler (Zeilen-) Richtung des Sensors $N_T$ erkennbare Positionen. Dies sind typischerweise Hell-Dunkel- oder Dunkel-Hell-Übergänge. Weiterhin liegen die erkennbaren Positionen zumeist auf dem Rand des Musters, d.h. die erkennbaren Positionen sind häufig nicht Teil der Textur des Musters.

Aus Objektgröße und Objektabstand lässt sich die Größe des Musters auf dem Sensor berechnen. Sind die erkennbaren Positionen des Musters nicht am Pixelraster orientiert, was für praktische Anwendungen kaum eine Einschränkung ist, lässt sich damit die Anzahl der Pixel auf dessen Rand abschätzen und somit $N_T$ bestimmen. Für den Fehler der Positionsbestimmung $E_P$ des Musters ergibt sich folgende Proportionalitätsbeziehung:

$$E_P \propto \frac{G}{\sqrt{N_T}} \qquad\qquad (1)$$

wobei G die insensitive Lücke zwischen zwei Pixeln spezifiziert. Dazu muss noch der Fehler berücksichtigt werden, welcher aus dem Signalrauschen resultiert.

Ohne ein Subsampling ist G der Abstand zwischen den sensitiven Flächen benachbarter Pixel, woraus für G>0 ein Füllfaktor <1 resultiert. Mit einem Subsampling kommt zu diesem Bildpunktabstand noch die Fläche der nicht ausgelesenen Pixel zwischen den ausgelesenen Bildpunkten hinzu, wobei das Subsampling auch $N_T$ reduziert.

Der Proportionalitätsfaktor in Gleichung (1) lässt sich für einfache Muster theoretisch herleiten oder anhand von Messungen bestimmen.

Damit lässt sich das N-fach Subsampling mit dem maximalen N bestimmen, welches die gewünschte Messgenauigkeit der Richtungsmessung noch gewährleistet.

Bei der idealen Wahl des Subwindowings muss die zuvor getroffene Auswahl des Subsamplings berücksichtigt werden Zudem kann es vorteilhaft sein, die Größe des Musters in die Optimierung einfließen zu lassen, wobei diese z.B. auch aus der Objektdistanz geschätzt werden kann.

Dabei wird die Gesichtsfeldgrösse so eingestellt, dass eine maximale Winkelbeschleunigung des Objektpunktes, welche zwischen zwei Richtungsmessungen auftritt, toleriert werden kann, d.h. die Gesichtsfeldgrösse wird so gewählt, dass sich trotz der Winkelbeschleunigung der Objektpunkt bei der zweiten Messung noch im Gesichtsfeld des Detektors befindet.

Unter dem Begriff der "geodätischen Vermessung" oder "geodätischen Anwendung" soll verallgemeinernd stets Messungen bezeichnet werden, die eine Bestimmung oder Überprüfung von Daten mit räumlichem Bezug beinhalten. Insbesondere sollen hier auch alle Anwendungen verstanden werde, die in Zusammenhang mit der Verwendung eines geodätischen Instruments bzw. geodätischen Messgerätes erfolgen. Dies betrifft vor allem Theodoliten und Totalstationen als Tachymeter mit elektronischer Winkelmessung und elektrooptischem Entfernungsmesser. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung bzw. Maschinenpositionierung oder -führung.

Das erfindungsgemässe Verfahren wird nachfolgend anhand von in der Zeichnung schematisch dargestellten Ausführungsbeispielen rein beispielhaft näher beschrieben. Im einzelnen zeigen

Fig.1  die Darstellung einer möglichen Anwendung des Verfahrens zur Vermessung;

Fig.2  die Darstellung der Aufnahme eines Bildes mit einem Muster vermittels eines Bildsensors;

Fig.3  die Darstellung einer Auswahl von Bildinformationen durch ein Subwindowing;

Fig.4  die Darstellung einer Auswahl von Bildinformationen durch ein Subsampling;

Fig.5  die Darstellung einer erfindungsgemässen Auswahl von Bildinformationen durch eine Kombination von Subwindowing und Subsampling;

Fig.6  die Darstellung der Bedingungen bei einer dynamischen Messaufgabe und

Fig.7  die Darstellung eines Transformationsmodells zur Ableitung einer Richtungsinformation aus der Position eines Musters.

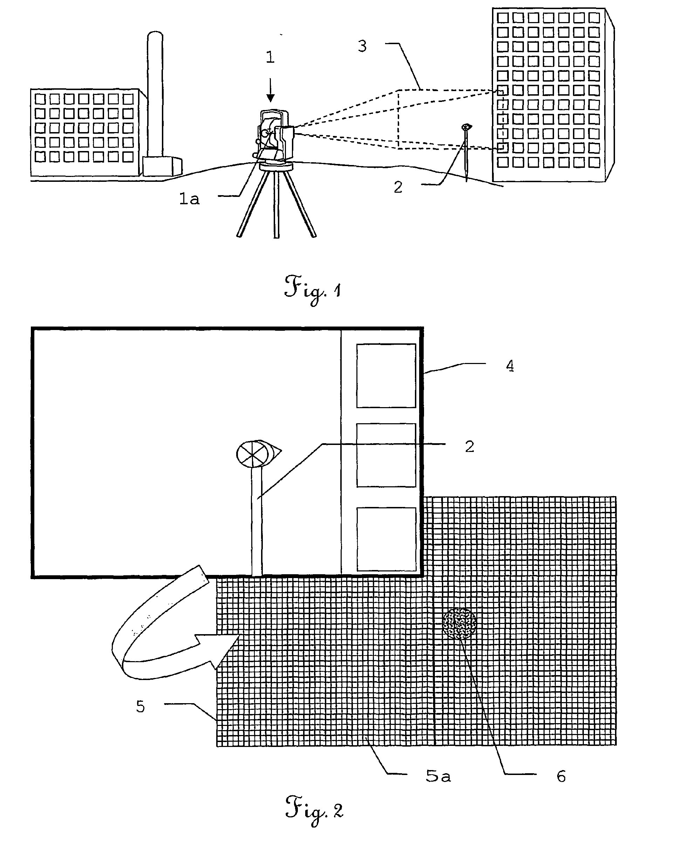

In Fig.1 wird eine mögliche Anwendung des erfindungsgemässen Verfahrens zur Vermessung dargestellt. Durch eine Totalstation als geodätisches Messgerät 1 werden auf einer Baustelle Referenzpunkte vermessen, die durch einen Lotstock mit Reflektor als Objekt 2 erkennbar gekennzeichnet werden. Dabei besitzt der in das Messgerät 1 integrierte Bildsensor 1a ein Sensorgesichtsfeld 3, in dem sich das zu vermessende Objekt 2 befinden soll. Zu diesem Objekt 2 wird die Richtung bestimmt. Das Sensorgesichtsfeld 3 wird in dieser Figur zwar rein beispielhaft rechteckig dargestellt, es kann jedoch auch in anderen Formen ausgebildet sein.

In Fig.2 erfolgt die Darstellung der Aufnahme eines Bildes 4 mit einem Muster 6 vermittels eines Bildsensors. Das vom Bildsensor aufgenommene Bild 4 erfasst das zu vermessende Objekt 2. Sensorseitig wird dieses Bild 4 durch ein Array 5 aus Bildpunkten 5a aufgenommen und in elektronisch auswertbare Signale umgesetzt. Dem zu vermessenden Objekt 2 entspricht dabei ein Muster 6 auf dem Array 5. Dieses Muster 6 und die diesem zugeordneten Bildpunkte können beispielsweise anhand des Übergangs von Hell zu Dunkel identifiziert werden. Allerdings benötigt das Auslesen aller Bildpunkte 5a des Arrays 5 eine gewisse Zeit, welche die erzielbare Frequenz der Bildverarbeitung bestimmt. Zur Bestimmung der Richtung des Objekts 2 genügt es jedoch, die Lage des Musters 6 im Bild 4 bzw. auf dem Array 5 zu kennen, so dass nicht alle Bildpunkte 5a des Arrays 5 in vollem Umfang benötigt werden. Während bei CCD-Kameras stets ein vollständiges Auslesen erfolgt, kann bei anderen Bautypen, wie z.B. CMOS-Kameras, der einzelne Bildpunkt 5a selektiv ausgelesen werden, so dass eine auf den zur Richtungsbestimmung benötigten Bildinhalt abgestimmte Nutzung realisierbar ist.

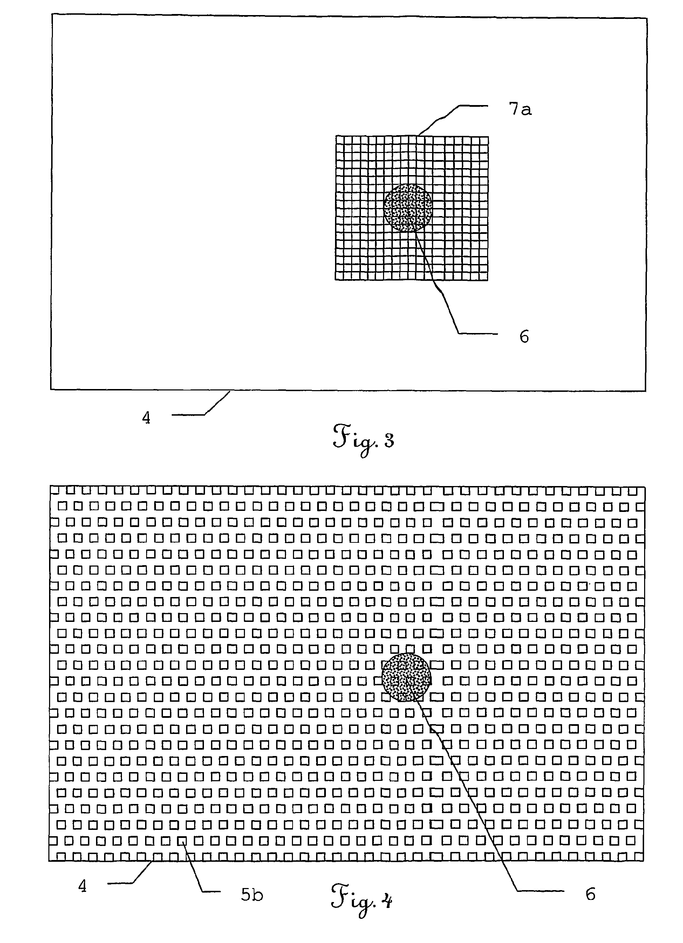

Fig.3 zeigt die Darstellung einer Auswahl von Bildinformationen durch ein Subwindowing. Das Muster 6 des im Bild 4 erfassten Objekts wird durch eine zusammenhängende Teilmenge der Bildpunkte des Bildsensors aufgenommen, wobei diese Teilmenge ein Fenster als Teilbereich 7a des Bildes 4 definiert. Dies bedeutet, dass nur ein Teil des durch das Sensorgesichtsfeld definierten Bildes ausgewertet wird, wobei die Auswertung allerdings im betrachteten Teilbereich 7a alle zur Verfügung stehenden Bildpunkte nutzt. Die Reduktion der genutzten Bildpunkte kann bereits aufnahmeseitig erfolgen, indem nur ein Teil der Bildpunkte überhaupt zur Aufnahme genutzt wird - z.B. aufgrund hardwareseitiger Massnahmen - oder aber bei der Bestimmung der Position des Musters, indem nur ein Teil der grundsätzlich verfügbaren Bildinformation ausgelesen wird.

Fig.4 zeigt die Darstellung einer Auswahl von Bildinformationen durch ein Subsampling. Hier werden Bildpunkte 5a nach einem bestimmten Schema von der Nutzung ausgeschlossen, so dass nur der Inhalt einer Teilmenge von Bildpunkten 5a verwendet wird. In diesem Beispiel wird in jeder Zeile nur jeder zweite Bildpunkt 5a genutzt und zusätzlich wird der Inhalt jeder zweiten Zeile vollständig unberücksichtigt gelassen. Ausserdem werden die genutzten Bildpunkte 5a zeilenweise gegeneinander versetzt. Das Muster 6 des im Bild 4 erfassten Objekts wird durch eine Teilmenge der Bildpunkte 5a des Bildsensors aufgenommen, wobei diese Teilmenge das gesamte durch das Sensorgesichtsfeld definierte Bild 4 abdeckt. Dabei werden die prinzipiell zur Verfügung stehenden Bildpunkte 5a nicht vollständig genutzt. Im Vergleich zur Nutzung aller Bildpunkte 5a handelt es sich um eine Aufnahme mit gröberem Raster, das einem Bildsensor mit verringertem Füllfaktor entspricht. Die dargestellte Auswahl von Bildpunkten 5a ist nur ein Beispiel. Es ist erfindungsgemäss eine Fülle weiterer Schemata verwendbar. Insbesondere können auch Auswahlverfahren ohne zeilenweise Versetzung (Spalten und/oder Zeilensubsampling) oder Auswahlverfahren mit nicht periodischen Folgen oder auch Aggregate von Bildpunkten 5a verwendet werden.

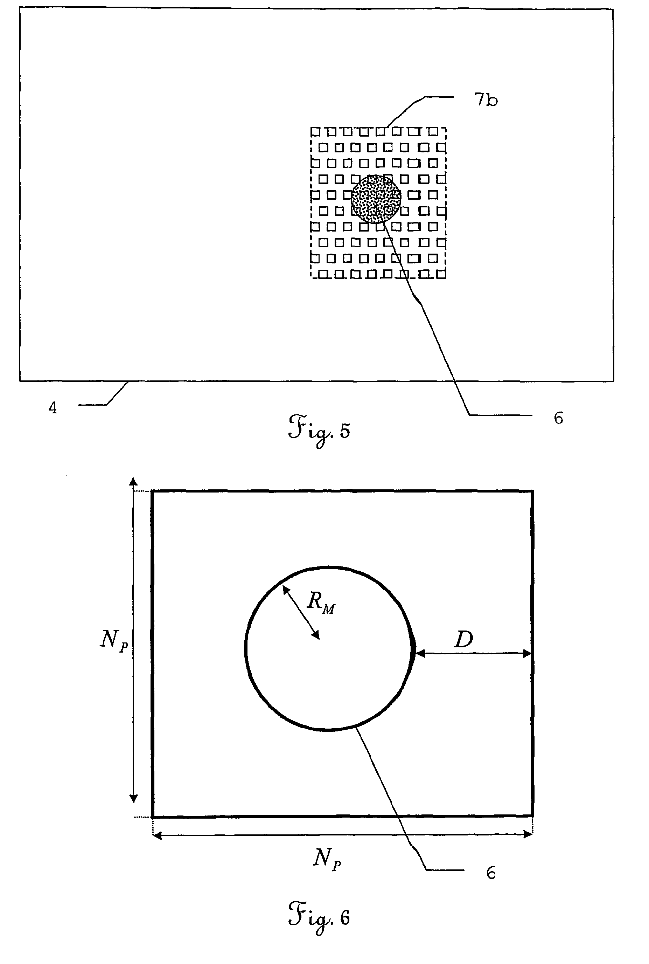

In Fig.5 erfolgt die Darstellung einer erfindungsgemässen Auswahl von Bildinformationen durch eine Kombination von Subwindowing und Subsampling. Bei dieser Auswahl werden die in Fig.3 und Fig.4 dargestellten Ansätze kombiniert, so dass nur ein Teilbereich 7b des Bildes 4 zur Bestimmung der Position des Musters 6 genutzt wird. In diesem Teilbereich 7b werden nicht alle grundsätzlich für eine Auswertung zur Verfügung stehenden Bildpunkte tatsächlich genutzt, sondern es wird nach einem Schema eine Auswahl der Bildpunkte vorgenommen. Diese Auswahl von Bildinformationen verfolgt somit einen zweistufigen Ansatz. Zum einen wird nur ein Teilbereich 7b des Bildes überhaupt genutzt. Zum anderen werden innerhalb dieses Teilbereichs 7b nicht alle verfügbaren Bildpunkte ausgewertet. Erfindungsgemäss können über dieses Beispiel hinaus auch andere Kombinationen von Subwindowing und Subsampling verwendet werden. Insbesondere können auch mehrere Teilbereiche mit unterschiedlicher interner Auswahl genutzt werden, wobei diese Teilbereiche auch überlappen können.

Fig.6 veranschaulicht die Berechnung der optimalen Bildauflösung am Beispiel eines Sensors mit quadratischen Bildpunkten - wie in den Fig.2 bis Fig.5 dargestellt - und gleicher Geschwindigkeitsanforderung in beiden Sensorrichtungen. Die Vorgehensweise lässt sich leicht auf rechteckige Bildpunkte und/oder verschiedene Geschwindigkeitsanforderungen verallgemeinern.

Gegeben sei eine Bildauflösung von $N_P \times N_P$ Pixeln. Der Zeitbedarf $T_M$ der Richtungsmessung ergibt sich aus der Bildauflösung typischerweise als Polynom 2. Grades mit den Koeffizienten $C_n$:

$$T_M = C_2 N_P^2 + C_1 N_P + C_0 \qquad\qquad (2)$$

Auf einem Sensorbereich mit $N_P \times N_P$ Pixeln befindet sich das Muster 6. Dessen Grenzen werden in diesem Beispiel als Kreis mit Radius $R_M$ angenommen. Möchte man während der Messaufgabe eine kontinuierliche Richtungsmessung gewährleisten, so darf das Muster 6 während der Messzeit $T_M$ den sensitiven Bereich nicht verlassen. Somit ist die maximale Geschwindigkeit des Musters 6 auf dem Sensor:

$$V_{Max} = \frac{D}{T_M} = \frac{\frac{N_P}{2} - R_M}{C_2 N_P^2 + C_1 N_P + C_0} \qquad\qquad (3)$$

Das optimale Subwindowing maximiert diese Geschwindigkeit:

$$N_{P,Opt} = \frac{2 R_M C_2 + \sqrt{4 R_M^2 C_2^2 + C_2 C_0 + 2 R_M C_2 C_1}}{C_2} \qquad (4)$$

Wählt man die Bildauflösung $N_{P,Opt} \times N_{P,Opt}$ so liefert dies die größtmögliche Geschwindigkeit des Musters auf dem Sensor welche noch aufeinanderfolgende Messungen zulässt. Hat sich das Muster 6 während der Messzeit die Strecke D auf dem Sensor bewegt, so kann bei anfänglich zentraler Lage des Musters 6 noch eine Messung durchgeführt werden, bevor das Gesichtsfeld des Detektors für die nächste Messung nachgeführt werden muss. Übersteigt der Wert von $N_{P,Opt}$ die Anzahl von Bildpunkten in einer Sensorrichtung, z.B. $N_{P,Opt}$ > Anzahl von Bildpunkten in der Zeile unter Berücksichtigung von evtl. Subsampling, so muss der Sensor in dieser Richtung ohne Subwindowing nachgeführt werden. In diesem Beispiel bedeutet das, dass von Zeilen, die das evtl. Zeilensubsampling vorsieht, alle Bildpunkte, die das evtl. Spaltensubsampling vorsieht, ausgewertet werden. Dies wäre auch die Vorgehensweise für den Fall von $C_2$ = 0.
Soll nur eine kontinuierliche Nachführung des Gesichtsfeldes erfolgen, so ist es oft auch möglich die Position des Musters 6 vergleichsweise grob, z.B. mit einem zulässigen Messfehler entsprechend dem halben Detektorgesichtsfeld, zu bestimmen, wenn nur die Mitte des Musters im Gesichtsfeld des Sensors ist. Dies bedeutet nur ein Teil der Fläche des Musters 6 ist auf dem ausgewerteten Sensorbereich. Bei dieser Aufgabenstellung ist die maximal zulässige Geschwindigkeit des Musters 6 auf dem Sensor

$$V_{Max} = \frac{\frac{N_P}{2}}{T_M} \qquad\qquad (5)$$

und damit die optimale Auflösung $N_{P,Opt} \times N_{P,Opt}$ des ausgewerteten Bildbereichs:

$$N_{P,Opt} = \sqrt{\frac{C_0}{C_2}} \qquad\qquad (6)$$

Wiederum werden, wenn $N_{P,Opt}$ größer ist als die Anzahl der - unter Berücksichtigung des Subsamplings - auswertbaren Bildpunkte in einer Sensorrichtung alle diese Bildpunkte ausgewertet. Das gleiche gilt für beide Sensorrichtungen, wenn $C_2$ = 0 ist.
In den folgenden Figuren wird exemplarisch eine Möglichkeit skizziert, aus der Position des Musters auf dem Bildsensor die gewünschte Richtungsinformation zu errechnen.

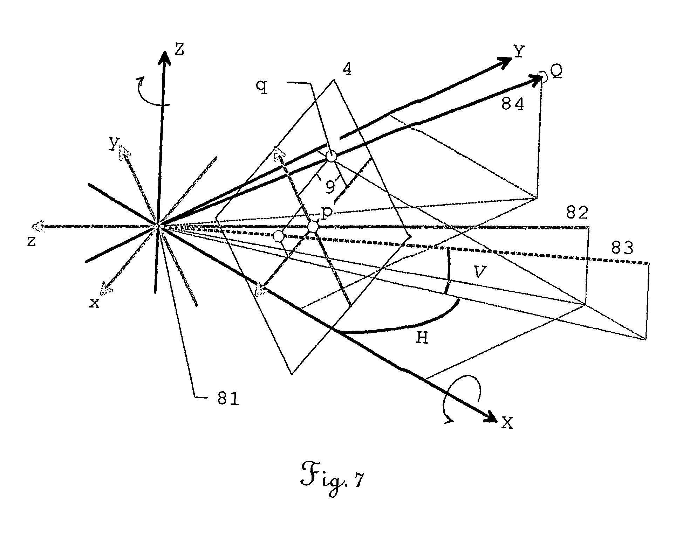

Fig. 7 zeigt das Transformationsmodell zur Transformation einer Bild-Koordinate eines Punkts q des Musters in Polarwinkel eines erfassten Objekts mit einem Objektpunkt Q. Durch dieses Transformationsmodell kann grundsätzlich die Position bzw. die Richtung eines Objektpunktes aus der Position des Musters abgeleitet werden.

Damit die Polarwinkel eines beliebigen Objektpunktes Q innerhalb des Sensorgesichtsfeldes anhand seiner Position im Muster bzw. dem Bild 4, das von dem Bildsensor erfasst wird, und somit anhand seiner Bild-Koordinate bestimmt werden können, muss eine mathematische Beschreibung der Abbildung des im Sensorgesichtsfeld befindlichen Objektes als Muster - bzw. eines Objektpunkts Q als entsprechender Punkt q im Muster - im Bild 4 bekannt sein. Im Folgenden soll die Transformation von Punkten im Bild-Koordinatensystem x, y, z in das Objektkoordinatensystem X, Y, Z anhand der Fig. 7 beschrieben werden. Die Achse Z weist in Richtung des Zenits und stellt bspw. die Stehachse eines geodätischen Messgerätes dar, die Achse X wird bspw. von der Kippachse gebildet.

Für eine vereinfachte Transformation mit beschränkter Genauigkeit können folgende Annahmen gemacht werden, wobei exemplarisch von einem geodätischen Messgerät ausgegangen wird, das bezüglich seiner Achssysteme und seines prinzipiellen Aufbaus einem Theodoliten entspricht:

- Das Projektionszentrum 81 der Abbildung der innerhalb des Sensorgesichtsfelds erfassten Objekte auf den Bildsensor liegt im Schnittpunkt von Stehachse und Kippachse.
- Die Kippachse ist senkrecht zur Stehachse.
- Die optische Achse 82 und die Theodolitenachse 83 schneiden sich im Projektionszentrum 81. Hierbei ist die optische Achse 82 definiert als die Achse durch eine Optikeinheit und somit im wesentlichen diejenige Achse, welche durch die Zentren der Linsen geht. Die Theodolitenachse 83 ist definiert als diejenige Achse, bezüglich welcher die Verdrehwinkel um die Stehachse und die Kippachse gemessen werden. Das bedeutet, dass der Schnittpunkt der Theodolitenachse 83 mit dem Bildsensor bei einer Zweilagenmessung exakt auf den zu vermessenden Objektpunkt Q des Objekts zeigt. Dies entspricht der Zielachse bezüglich des Fadenkreuzes bei optischen Theodoliten.

Es ist jedoch auch möglich, nicht von diesen Annahmen auszugehen, sondern die Transformation entsprechend zu erweitern, wobei beispielsweise Achsfehler - insbesondere ein Achsversatz oder eine Achsschiefe - in die Transformation mit einbezogen werden. Dies sorgt für eine weitere Erhöhung der Genauigkeit der Transformation und biete sich daher besonders bei geodätischen Messgeräten höchster Präzisionsklasse an.

Die Berechnungen beschränken sich auf die Abbildung eines Objektpunktes Q in einem übergeordneten Koordinatensystem, welches horizontal ist und dessen Ursprung im Projektionszentrum 81 liegt, in die Bildebene des Bildes 4. Eine Überführung in ein beliebiges Koordinatensystem kann mittels Verschiebung und Rotation über die bekannte Helmert-Transformation mit Massstab gleich eins durchgeführt werden.

Das Transformationsmodell zur Transformation einer Aufnahmebild-Koordinate in eine Objekt-Koordinate lautet wie folgt:

$$\mathbf{r}_q = \mathbf{r}_P + \mathbf{T}_0 \cdot \left( \frac{1}{m} \cdot \mathbf{T}_{Hz,V} \cdot \mathbf{R}_{Inc} \cdot \mathbf{r}_Q \right)$$

mit

$\mathbf{r}_Q$    Objektvektor 84 des Punktes Q im System (X,Y,Z).

$\mathbf{r}_q$    Vektor eines Punkts q des Musters, also des Abbildes des Objektpunkts Q auf dem Bild 4, gemessen im Bild-Koordinatensystem x, y, z. Die x- und y-Komponenten wird durch die Aufnahmebild-Koordinate 9 bestimmt. Die z-Komponente entspricht der Kammerkonstante c, die definiert ist als der Abstand des Bildsensors und somit des Bildes 4 vom Projektionszentrum 81. Die Kammerkonstante ändert sich mit der Stellung einer Fokuslinse der Optikeinheit und damit mit der fokussierten Objektdistanz.

$\mathbf{r}_P$    Bildursprungsvektor, welcher den Schnittpunkt p von der optischen Achse 82 mit der Bildebene 4 beschreibt.

$m$    Abbildungsmassstab.

$\mathbf{R}_{Inc}$    Rotationsmatrix, die verkippte Theodolitenebene und Horizontalebene in Zusammenhang setzt.

$\mathbf{T}_{Hz,V}$    Transformationsmatrix welche die Orientierung der Theodolitenachse 83 basierend auf dem Horizontalwinkel H, dem Vertikalwinkeln V und den Korrekturen der Achsenfehler beschreibt.

$\mathbf{T}_0$    Matrix zur Modellierung der optischen Verzerrungen.

Fig.7 skizziert die obige Transformation des Objektpunktes $\mathbf{r}_Q$ vom übergeordneten Koordinatensystem X, Y, Z in das Bildkoordinatensystem x, y, z. Mittels der gemessenen Neigungswinkel, des Horizontalwinkels H, des Vertikalwinkels V und der Achsenkorrekturen ist es möglich, den Objektpunktvektor $\mathbf{r}_Q$ in das System des Bildsensors abzubilden. Die Abweichung der optischen Achse 82 von der Theodolitenachse 83 und die optischen Verzerrungen werden mittels geeigneter Transformationen und Kalibrierungen korrigiert.

Es eignen sich hier Ansätze aus der Photogrammetrie, wie zum Beispiel die aus dem Stand der Technik bekannte Modellierung nach Brown oder Bayer. Bei schmalwinkligen Systemen kann die Korrektur durch eine einfache Affintransformation modelliert werden.

Ein weiteres Beispiel für eine Umrechnung der Position des Musters auf dem Bildsensor in eine Richtungsinformation ist die Fokus-Unendlich Anordnung. Hierbei wird der Bildsensor in der Brennebene eines Objektivs angebracht. Geht vom Objektpunkt ein Strahlenbündel von hinreichend geringer Divergenz aus, so entspricht der Position des daraus resultierenden - oft kreisförmigen - Musters direkt die Richtung bezüglich des vorderen Hauptpunkts des Objektivs.

In den Figuren sind die Verfahrensschritte, Gebäude und verwendeten Instrumente rein schematisch dargestellt. Insbesondere können aus den Darstellungen keine Grössenverhältnisse oder Details der Bildaufnahme bzw. Bildverarbeitung entnommen werden. Die nur exemplarisch als Bildpunkte dargestellten Punkte stehen stellvertretend auch für komplexere Strukturen bzw. eine grössere Anzahl von Bildpunkten in einem Bildsensor.


**Patentansprüche**

1. Verfahren zur Richtungsbestimmung zu einem zu vermessenden Objekt (2), unter Verwendung eines geodätischen Messgeräts (1) mit
einem Bildsensor (1a), wobei dessen Sensorgesichtsfeld (3) zumindest einen Teil des zu vermessenden Objekts (2) erfasst,
mit den Schritten

   • Aufnehmen eines Bildes (4) mit Bildinformationen durch den Bildsensor (1a), wobei das Bild (4) ein dem Objekt (2) zuordenbares Muster (6) aufweist, dessen Position innerhalb des Bildes (4) eine Bestimmung der Richtung zum Objekt (2) ermöglicht,
   • Bestimmen der Position des Musters (6) innerhalb des Bildes (4), und
   • Ableiten einer dem Objekt (2) zugeordneten Richtungsinformation aus der Position des Musters (6), wobei die Richtung von einem dem Bildsensor (1a) zugeordneten Detektionspunkt zum Objekt (2) bestimmt wird.

   wobei nur eine Teilmenge der Bildinformationen zur Richtungsbestimmung ausgewählt und verwendet wird,
   **dadurch gekennzeichnet, dass**
   die Teilmenge der Bildinformationen durch eine Optimierung unter Einhaltung einer vorgegebenen Messgenauigkeit vermittels

   • einer Auslassung von Bildpunkten (5a) in regelmässiger, nicht-periodischer oder stochastischer Folge und/oder
   • einem Subwindowing beim Aufnehmen eines Bildes (4) als Auswahl eines Teilbereichs (7b) des Bildsensors (1a) und einem Subsampling als gezieltem Auslassen von Bildpunkten (5a) innerhalb des Teilbereichs (7b),

   ausgewählt wird.

2. Verfahren nach Anspruch 1,
   **dadurch gekennzeichnet, dass**
   bei der Auslassung von Bildpunkten eine Periodizität so gewählt wird, dass die örtliche Auflösbarkeit der Position des Musters (6) die Bestimmung der Richtung zum Objekt (2) mit der vorgegebenen Messgenauigkeit erlaubt.

3. Verfahren nach einem der vorangehenden Ansprüche,
   **dadurch gekennzeichnet, dass**
   beim Ableiten der Richtungsinformation eine Verifikation erfolgt, dass das Objekt (2) zumindest teilweise innerhalb des Sensorgesichtsfelds (3) positioniert ist.

4. Verfahren nach einem der vorangehenden Ansprüche,
   **dadurch gekennzeichnet, dass**
   ein Festlegen von Subsampling-Parametern vor einem Festlegen der Subwindowing-Parameter erfolgt.

5. Verfahren nach einem der vorangehenden Ansprüche,
   **dadurch gekennzeichnet, dass**
   beim Subwindowing die Auswahl des Teilbereichs (7b) anhand wenigstens einer der folgenden Grössen erfolgt

   - Objektgrösse,
   - Objektdistanz,

- Gewünschte Messgenauigkeit
- Ausdehnung des Musters (6),
- erwartete oder gemessene maximale Winkelbeschleunigung.

**6.** Verfahren nach einem der vorangehenden Ansprüche,
**dadurch gekennzeichnet, dass**
beim Subsampling eine Auswahl auszulassender Bildpunkte (5a) anhand wenigstens einer der folgenden Grössen erfolgt

- Objektgrösse,
- Objektdistanz,
- Gewünschte Messgenauigkeit
- Ausdehnung des Musters (6),
- erwartete oder gemessene maximale Winkelbeschleunigung.

**7.** Verfahren nach einem der vorangehenden Ansprüche,
**dadurch gekennzeichnet, dass**
beim Subsampling Spalten und/oder Zeilen des Bildsensors (1a), insbesondere in Form eines rechteckigen Teilbereichs (7b) des Bildsensors (1a), ausgelassen werden.

**8.** Computerprogrammprodukt mit Programmcode, der auf einem maschinenlesbaren Träger gespeichert ist, zur Durchführung des Verfahrens nach einem der Ansprüche 1 bis 7.

**9.** Analoges oder digitales Computer-Daten-Signal, verkörpert durch eine elektromagnetische Welle, mit einem Programmcode-Segment zur Durchführung des Verfahrens nach einem der Ansprüche 1 bis 7.

**Claims**

**1.** Method for determination of the direction to an object (2) to be surveyed, using a geodetic measuring device (1) comprising
an image sensor (1a), the field of view (3) of which sensor covering at least a part of the object (2) to be surveyed, comprising the steps

• recording of an image (4) with image information by the image sensor (1a), the image (4) having a pattern (6) which can be coordinated with the object (2) and the position of which within the image (4) permits a determination of the direction to the object (2),
• determination of the position of the pattern (6) within the image (4), and
• derivation of direction information coordinated with the object (2) from the position of the pattern (6), the direction from a detection point coordinated with the image sensor (1a) to the object (2) being determined,

only a subset of the image information being selected and being used for determination of the direction,
**characterized in that** the subset of the image information is selected by optimization while maintaining a predetermined accuracy of measurement by means of

• omission of image points (5a) in a regular, nonperiodic or stochastic sequence and/or
• subwindowing during recording of an image (4) as selection of a partial region (7b) of the image sensor (1a) and subsampling as targeted omission of image points (5a) within the partial region (7b).

**2.** Method according to Claim 1, **characterized in that,** on omission of image points, a periodicity is chosen so that the local resolvability of the position of the pattern (6) permits the determination of the direction to the object (2) with the predetermined accuracy of measurement.

**3.** Method according to either of the preceding claims, **characterized in that,** on derivation of the direction information, it is verified that the object (2) is positioned at least partly within the field of view (3) of the sensor.

**4.** Method according to any of the preceding claims, **characterized in that** subsampling parameters are established before establishing the subwindowing parameters.

**5.** Method according to any of the preceding claims, **characterized in that,** during the subwindowing, the choice of the partial region (7b) is made on the basis of at least one of the following variables

- object size,
- object distance,
- desired accuracy of measurement,
- extension of the pattern (6),
- expected or measured maximum angular acceleration.

**6.** Method according to any of the preceding claims, **characterized in that,** during the subsampling, a choice of image points (5a) to be omitted is made on the basis of at least one of the following variables

- object size,
- object distance,
- desired accuracy of measurement

  - extension of the pattern (6),
  - expected or measured maximum angular acceleration.

**7.** Method according to any of the preceding claims, **characterized in that,** during subsampling, columns and/or rows of the image sensor (1a), in particular in the form of a rectangular partial region (7b) of the image sensor (1a), are omitted.

**8.** Computer program product comprising program code, which is stored on a machine-readable medium, for carrying out the method according to any of Claims 1 to 7.

**9.** Analogue or digital computer data signal, represented by an electromagnetic wave, with a program code segment for carrying out the method according to any of Claims 1 to 7.

**Revendications**

**1.** Procédé de détermination directionnelle par rapport à un objet (2) à mesurer, en utilisant un appareil de mesure (1) géodésique, avec
un capteur d'images (1a), dont le champ de vision de capteur (3) appréhende au moins une partie de l'objet (2) à mesurer,
avec les étapes :

  • d'enregistrement d'une image (4) avec des informations d'image, au moyen du capteur d'images (1a), l'image (4) présentant un motif (6), susceptible d'être associé à l'objet (2), dont la position à l'intérieur de l'image (4) permet une détermination de la direction par rapport à l'objet (2),
  • de détermination de la position du motif (6) à l'intérieur de l'image (4), et
  • de dérivation d'une information directionnelle, associée à l'objet (2), à partir de la position du motif (6), la direction d'un point de détection, associé au capteur d'images (1a), étant déterminée,

seule une quantité partielle des informations d'image au sujet de la détermination directionnelle étant sélectionnée et utilisée,
**caractérisé en ce que**
la quantité partielle des informations d'image est sélectionnée au moyen d'une optimisation, en respectant une précision de mesure prédéterminée, par :

  • omission des points image (5a) situés en une succession régulière, non périodique ou stochastique et/ou
  • accomplissement d'un subwindowing lors de l'enregistrement d'une image (4), en tant que sélection partielle d'une zone d'image (7b) du capteur d'image (1a), et d'un subsampling, en tant qu'omission, à dessein, de points d'image (5a) situés à l'intérieur de la zone partielle (7b).

**2.** Procédé selon la revendication 1,
**caractérisé en ce que**

lors de l'omission de points d'image, une périodicité est choisie de manière que la possibilité de résolution locale de la position du motif (6) permette la détermination de la direction par rapport à l'objet (2), avec la précision de mesure prédéterminée.

3. Procédé selon l'une des revendications précédentes,
**caractérisé en ce que,**
lors de la dérivation de l'information directionnelle, il est vérifié si l'objet (2) est positionné au moins partiellement à l'intérieur du champ de vision de capteur (3).

4. Procédé selon l'une des revendications précédentes,
**caractérisé en ce que**
l'on fixe les paramètres de subsampling avant de fixer les paramètres de subwindowing.

5. Procédé selon l'une des revendications précédentes,
**caractérisé en ce que,**
lors du subwindowing, on sélectionne la zone partielle (7b) à l'aide d'au moins l'une des grandeurs suivantes :

   - grosseur d'objet,
   - distance d'objet,
   - précision de mesure souhaitée,
   - étendue du motif (6),
   - accélération angulaire maximale escomptée ou mesurée.

6. Procédé selon l'une des revendications précédentes,
**caractérisé en ce que,**
lors du subsampling, on sélectionne des points d'image (5a) à omettre à l'aide d'au moins l'une des grandeurs suivantes :

   - grosseur d'objet,
   - distance d'objet,
   - précision de mesure souhaitée,
   - étendue du motif (6),
   - accélération angulaire maximale escomptée ou mesurée.

7. Procédé selon l'une des revendications précédentes,
**caractérisé en ce que**
lors du subsampling, on omet des colonnes et/ou des lignes du capteur d'images (1a), en particulier sous la forme d'une zone partielle (7b) rectangulaire du capteur d'images (1a).

8. Produit de programme informatique, avec un code de programme, stocké sur un support lisible par machine, pour la mise en oeuvre du procédé selon l'une des revendications 1 à 7.

9. Signal de données pour ordinateur, analogique ou numérique, matérialisé par une onde électromagnétique, avec un segment de code de programme, pour la mise en oeuvre du procédé selon l'une des revendications 1 à 7.

Fig. 1

Fig. 2

7a

6

4

Fig. 3

4

5b

Fig. 4

6

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0661519 A